# EUROPEAN PATENT APPLICATION

(11) **EP 4 621 381 A1**
(43) Date of publication of application: **24.09.2025**
(21) Application number: 25165128.7
(22) Date of filing: 20.03.2025
(51) Int. Cl.: G01N 15/10, G01N 15/1429

(54) **CALIBRATION AND TESTING OF OPTICAL PARTICULATE SENSORS**

(30) Priority: 22.03.2024 US 202463568685 P; 23.12.2024 US 202463737998 P; 17.03.2025 US 202519081539
(71) Applicant: Honeywell International Inc., Charlotte, NC 28202 (US)
(72) Inventor: DRAZAN, Viktor, Charlotte, NC 28202 (US); GAO, Kaizhong, Charlotte, NC 28202 (US); BADIN, Pavel, Charlotte, NC 28202 (US); LUKAS, Jan, Charlotte, NC 28202 (US)
(74) Representative: Haseltine Lake Kempner LLP

(57) **Abstract**

A system for calibration and testing an optical particulate sensor is provided. The system includes a carrier having at least one microtarget that is configured to emulate a particle; a frame, configured to receive the carrier, the frame further configured to position the at least one microtarget to pass through a measurement volume of the optical particulate sensor; a drive, coupled to the frame, that is configured to move the frame such that the at least one microtarget on the carrier moves through three dimensions of the measurement volume, such that a light beam from the optical particulate sensor is reflected/scattered toward the optical particulate sensor; and at least one processor configured to determine one or more characteristics of the at least one microtarget on the carrier based on the reflected/scattered light.

## Description

### STATEMENT REGARDING FEDERALLY SPONSORED RESEARCH OR DEVELOPMENT

This invention was made with Government support under S0176492/ 101102008 awarded by CAJU. The Government has certain rights in the invention.

### CROSS REFERENCE TO RELATED APPLICATION

This US Non-Provisional Patent Application claims the benefit of prior-filed US Provisional Patent Application No. 63/568,685, filed on March 22, 2024 (the '685 Application) and prior-filed US Provisional Patent Application No. 63/737,998, filed on December 23, 2024 (the '998 Application). The '685 Application and the '998 Application are incorporated herein by reference.

### BACKGROUND

Optical particulate sensors are implemented in many types of systems, such as aircraft, for Atmospheric condition sensing. Such sensors can be implemented as a lidar system that uses optical signals to analyze characteristics of small and large particulate matter in the surrounding environment of, for example, the aircraft (aerosol particles, such as water droplets, ice crystals, volcanic ash, sand and dust particles). Optical particulate sensors are regularly calibrated and tested to ensure consistent functionality and optimal performance.

Existing systems and methods for testing and calibrating such optical particulate sensors are large, heavy, and complex. Further, such systems are typically limited to use in a laboratory environment due to the use of a distilled water supply that generates test droplets or pressurized air that is used for aerosolization of solid particle size standards. Further, such equipment requires regular maintenance and cleaning to function properly.

Therefore, a need exists to reduce the size, weight and complexity of systems used to test optical particulate sensors.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of any patents, applications and publications as identified herein to provide yet further embodiments.

In one embodiment, a system for calibration and testing an optical particulate sensor is provided. The system includes a carrier having at least one microtarget that is configured to emulate a particle; a frame, configured to receive the carrier, the frame further configured to position the at least one microtarget to pass through a measurement volume of the optical particulate sensor; a drive, coupled to the frame, that is configured to move the frame such that the at least one microtarget on the carrier moves through three dimensions of the measurement volume, such that a light beam from the optical particulate sensor is reflected/scattered toward the optical particulate sensor; and at least one processor configured to determine one or more characteristics of the at least one microtarget on the carrier based on the reflected/scattered light.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, as subsequently described and as described in conjunction with the detailed description.
FIG. 1A depicts a block diagram of one embodiment of a system for testing an optical particulate sensor.
FIG. 1B is a schematic diagram of a portion of system of FIG. 1A that illustrates two aspects: sensor sampling range and sensor measurement volume.
FIG. 2 illustrates airflow and calibration target motion through one embodiment of a laser beam profiles.
FIGs. 3A and 3B are perspective views of one embodiment of a frame for holding a carrier with a plurality of microtargets for the system of FIG. 1.
FIG. 4 is a table including data that illustrates an output by the system of FIG. 1 for various size microtargets.
FIG. 5 is a graph illustrating a calibration curve based on the data from FIG. 4.
FIG. 6 is a table including data that maps the measurement volume of the system of FIG. 1.
FIG. 7A is a graph that illustrates an optical response from a homogeneity test for various positions of calibration microtargets within a measurement volume of an optical particulate sensor, based on the data in FIG. 6.
FIG. 7B is a graph that illustrates an optical response for calibration microtargets within a sensor measurement volume, as well as an optical response for calibration microtargets out of a sensor measurement volume.
FIG. 8 is a side view of an embodiment of a carrier having a plurality of microtargets illustrating a possible source of error for the system for testing an optical particulate sensor of FIG. 1.
FIG. 9 is a side view of another embodiment of a carrier having a plurality of microtargets having a triangular cross-section that reduces the potential error of the carrier and microtargets of FIG. 8.
FIG. 10 is a side view of another embodiment of a carrier and microtarget for use in the system of FIG. 1.
FIG. 11 is a front view of one embodiment of the carrier and microtarget of FIG. 10.
FIG. 12 is a flow chart of an embodiment of a process for testing an optical particulate sensor.
FIG. 13 is a block diagram of one embodiment of a system for testing and calibrating an optical particle sensor with targets on a rotating wafer or disk.
FIG. 14 is a graph that illustrates an exemplary relationship between linear velocity and a radius of the rotating wafer or disk of FIG. 13.
FIGs. 15A, 15B, 15C, 15D, and 15E are perspective views of an embodiment of a carrier having a conical shape with targets formed thereon.
FIGs. 16A, 16B and 16C are perspective views of another embodiment of a carrier formed of concentric cylinders of decreasing width forming a stack with targets formed on a surface of each cylinder.
FIG. 17A is a perspective view of another embodiment of a disk or wafer shaped carrier having four parts or sections with targets formed thereon.
FIG. 17B is a top view of one embodiment of the carrier of FIG. 17A.
FIG. 18 is a top view of an alternative embodiment of the carrier of FIG. 17A having eight parts or sections.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which are shown by way of illustration specific illustrative embodiments. However, it is to be understood that other embodiments may be utilized, and that logical, mechanical, and electrical changes may be made. Furthermore, any methods presented in the drawing figures and the specification are not to be construed as limiting the order in which the individual steps may be performed. The following detailed description is, therefore, not to be taken in a limiting sense.

An Optical Particulate Sensor (OPS) uses a laser or other light source and a photodetector to gather data on particles in a measurement volume of the sensor. Essentially, the OPS irradiates particles in its measurement volume and the photodetector gathers data from the optical signal reflected/scattered by the particles. To test the OPS, particles, typically microdroplets of water of known size and composition are introduced into the measurement volume of the OPS using an elaborate laboratory setup.

Embodiments of the present invention replace conventional water microdroplets or particulate standards and their associated apparatus with a dedicated calibration device where solid microtargets are positioned on a carrier, e.g., an optically transparent material, or are integrated within the carrier to test and/or calibrate an optical particulate sensor. Various embodiments of microtargets that can be used for testing and calibrating an OPS are described in detail below. Avoiding the need to generate water droplets or to aerosolize particulate standards allows high reproducibility, high calibration accuracy, as well as significantly reduce size, weight, complexity and costs of the calibration device.

The microtargets used in embodiments of the present invention are formed from any appropriate material to produce a line, dot, two-dimensional or three-dimensional particle structure of an appropriate size (e.g., width and/or diameter) and reflectivity. The microtargets are designed to simulate or emulate potential particles to be sensed by an OPS under test. So, the dots and lines are sized similar to those potential particles. Additionally, the particles reflect/scatter light from the OPS, so the material, such as metals, from which the microtargets are formed also similarly reflects/scatters light from the OPS. This enables the OPS to receive the light reflected/scattered by the microtargets so that a detector of the OPS can produce an output that correlates to a characteristic (e.g., size) of particles to be sensed by the OPS under test.

### Oscillating Carrier

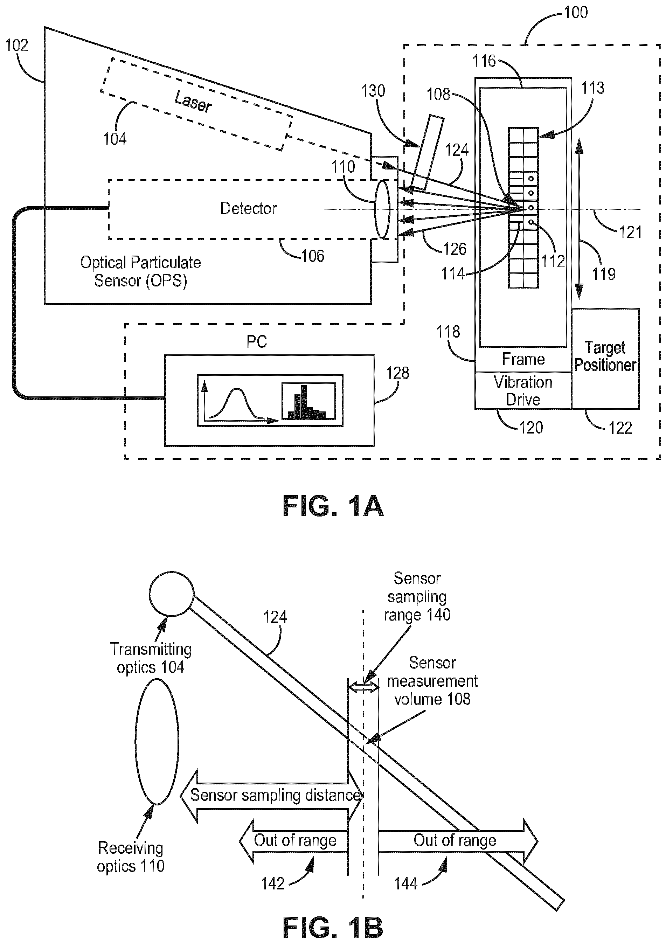

Figure 1A is a block diagram of one embodiment of a system 100 for testing and calibrating an optical particulate sensor (OPS) 102. OPS 102 includes transmitting optics (e.g., laser 104) and detector 106. Laser 104 of OPS 102 irradiates measurement volume 108 with light. Particles in measurement volume 108 cause the light from laser 104 to reflect/scatter back toward OPS 102. This reflected/scattered light passes through receiving optics (e.g., lens 110) into detector 106 which includes a photodetector that measures the amount of light reflected by any particles present in measurement volume 108. Detector 106 produces an output signal, based on the response of the photodetector which is provided to system 100.

Instead of creating and injecting particles into the measurement volume 108 of OPS 102, system 100 places microtargets 113 in measurement volume 108 of OPS 102 to simulate the presences of particles moving through measurement volume 108. In one embodiment, microtargets 113 comprise dots 112 and lines 114 on a carrier 116. In one embodiment, the carrier 116 and microtargets 113 is an Edmund Optics Micro Line and Dot Standard Stage Micrometer. The Edmunds Micrometer contains precise line and dot targets of sizes from 2 to 100 micrometers (microns) fabricated by depositing chrome on glass or chrome on opal. It is understood that the Edmunds Micrometer is provided by way of example and not by way of limitation.

Carrier 116 is mounted on frame 118 so that a selected one of the microtargets 113 (dots 112 and lines 114) is positioned in measurement volume 108. Each microtarget 113 on carrier 116 is available to be used to test OPS 102. During testing, the selected microtarget 113 is moved up and down along vibration motion axis 119 through measurement volume 108 by vibration drive 120 to simulate the motion of particles in measurement volume 108. To simulate the motion of a particle, the selected microtarget 113 leaves measurement volume 108 on each end of the vibration before the direction of its motion changes at the maximum shift (amplitude) of vibration. In one embodiment, the photodetector of detector 106 cannot detect the direction of flight of the microtarget 113 (or particle in normal operation). Therefore, vibrating the microtarget during a test in the same orientation of expected motion of a particle during normal operation will produce the same net result on the output of detector 106. That is, the number of microtargets 113 detected by OPS 102 is double the vibration frequency of vibration drive 120 (e.g., 100 "particles" detected for a 50 Hz vibration frequency of vibration drive 120). Additionally, system 100 also includes target positioner 122 which is used to adjust the location of carrier 116 and its microtargets 113 (dots 112 and lines 114), in measurement volume 108 of OPS 102 and to select the microtarget 113 which will be used for test if several microtargets 113 are available on carrier 116.

In some embodiments, system 100 includes light conditioning subsystem 130 that conditions or modifies incident light (laser beam 124) from laser 104. In one embodiment, light conditioning subsystem 130 is an attenuator that attenuates light from laser 104 to prevent the photodetector of detector 106 from being overloaded. In other embodiments, light conditioning subsystem 130 provides a half-wave plate which is configured to rotate the polarization of the light from laser 104 by 90 degrees so that sensors that use polarized light can be tested by system 100. In other embodiments, light conditioning subsystem 130 modifies any appropriate characteristic of the light from laser 104 to enable system 100 to test/calibrate all sensor channels.

In one embodiment, system 100 is implemented in a simple, robust and compact test/calibration device with low power requirements. In other embodiments, system 100 is a tabletop test/calibration device that is attachable to OPS 102 and used in production or in the shop before sensor installation into, for example, an aircraft. Further, in other embodiments, system 100 is a portable battery powered device that includes an interface that is configured or adapted to be attached to, for example, a sensor window on an aircraft surface and used to test OPS 102 without dismounting from the aircraft. When used to test a sensor installed in an aircraft, the sensor under test might be covered by an additional window protecting the sensor and assuring aircraft body aerodynamics and transparency of the additional window will be tested as well.

In operation, a particular size of particle is simulated in measurement volume 108 by using target positioner 122 to position the appropriate microtarget 113 (dots 112 or lines 114) on carrier 116 in a location such that vibration drive 120 can cause the dot 112 or line 114 to move up and down through the entire measurement volume 108 to simulate the motion of a particle. Laser 104 of OPS 102 transmits incident light (laser beam 124) at measurement volume 108. When the selected dot 112 or line 114 pass through the incident light, reflected/scattered light 126 passes through lens 110 into detector 106 and data is sent to processing system 128. Embodiments of OPS 102 include an interface to communicate with processing system 128 of system 100, either by wireless communication or by dedicated wired connection, allowing automatic sensor calibration. It is noted that microtargets having symmetrical shape, such as dots, are more suitable to emulate behavior of aerosol particles. This is especially useful for three-dimensional mapping of measurement volume 108 of OPS 102, where precise positioning of microtarget 113 improves the accuracy of the mapping of measurement volume 108. The microtargets having highly asymmetrical shape, such as lines, are more suitable to determine average optical response within one dimension of measurement volume 108. As the length of line microtargets is larger than the measurement volume 108 of OPS 102, it is less sensitive to positioning setup.

FIG. 1B is a schematic diagram of a portion of system 100 of FIG. 1A that illustrates two aspects of system 100: sensor sampling range 140 and sensor measurement volume 108 of OPS 102. Detector 106 of OPS 102 is designed to measure particles only from a certain sensor sampling range 140 from the surface of receiving optics (lens 110). The measurement volume 108 is an intersection of sensor sampling range 140 and laser beam 124 from laser 104. If an aerosol particle passes through laser beam 124 out of measurement volume 108, the reflected / scattered light received by receiving optics (lens 110) does not reach the sensor photodetectors of detector 106 as the received optical signal is blocked by sensor slit.

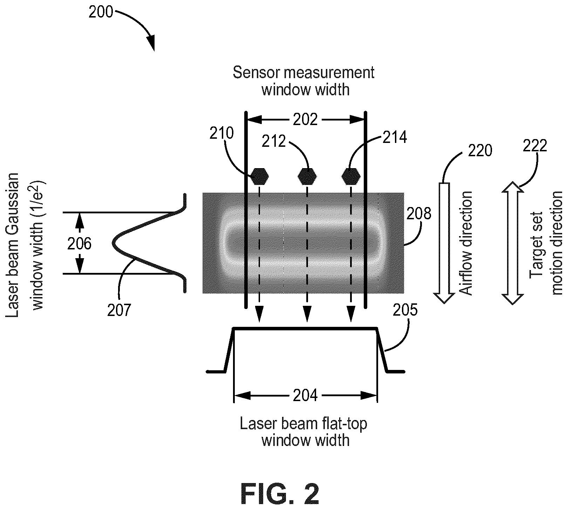

In one embodiment, if laser beam profile is observed from measurement volume 108 in direction to the laser 104, the laser beam flux 208 has a profile as shown on FIG. 2. The horizontal flux has flat-top window profile 205, and the vertical flux has Gaussian profile 207. The airflow direction 220 is approximately in the direction from the top of the image to the bottom of the image. The vibration drive 120 moves microtarget 113 in the same axis as the airflow direction 220, as marked by target set motion direction arrow 222. The flat-top window profile 205 is approximately perpendicular to the airflow direction 220, therefore aerosol particle passing through measurement volume 108 following different trajectories, such as left 210, middle 212 or right 214, travels through the same laser beam flux, therefore producing optical response independently from trajectory position. Sensor measurement window width 202 defined by optical receiver optics including the slit is smaller than the laser beam flat-top window width 204 in order to avoid optical response measurement with undefined illuminating flux, which exist at the edges of flat-top window profile 205.

While objects sensed by OPS 102 have size range of micrometers, the measurement volume 108 is in range of millimeter and sensor sampling distance is in range of centimeters / decimeters, all optical components of laser 104 and receiving optics (including lens 110) must be precisely aligned to optical axes laying in single plane. Calibration and functionality testing of OPS 102 consists of identification of the position and size of measurement volume 108 and verification of optical response homogeneity within measurement volume 108. Misalignment of transmit and receive optics is detected as performance degradation in certain areas of the measurement volume 108. System 100 is capable to provide target size and trajectory position with repeatability necessary to generate calibration data for the OPS 102.

System 100 also validates sensor capability to reject measurements out of measurement volume 108. Microtarget 113 is moved through the laser beam 124 outside of sensor sampling range 140, therefore outside of measurement volume 108. If laser 104 and receive optics (including lens110) are aligned properly, the optical response will be blocked by the receiving optics slit and no aerosol particle should be detected. If optical response is detected by the detector 106, it indicates a potential risk of sensor optics misalignment and a maintenance flag will be raised.

To fully validate proper functionality of OPS 102, the microtarget 113 is moved in all three spatial dimensions, validating proper optical response is generated within the whole measurement volume 108 and validating the capability of OPS 102 to reject an optical response generated by the microtarget 113 out of measurement volume 108.

As discussed in more detail below, processing system 128 processes digitized flashes of light 126 from the output of detector 106 and calculates a characteristic of the microtargets, e.g., size. By comparing the calculated characteristic with the known characteristic of the microtarget, calibration coefficients could be calculated and, with correction based on material differences (microtarget versus anticipated particles) could be used in OPS 102 during normal operation to ensure optimal performance and consistent functionality of OPS 102.

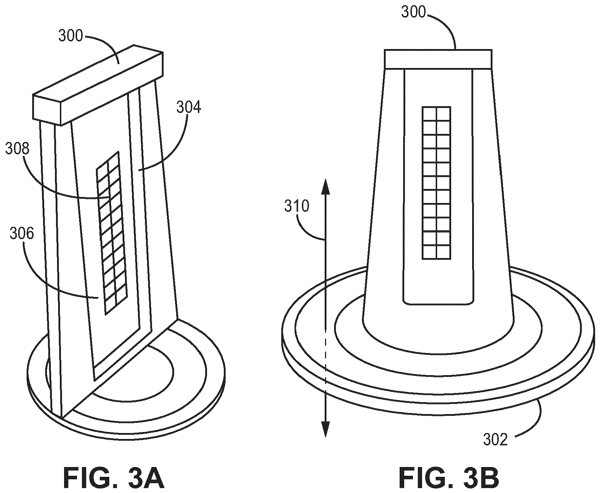

FIG. 3A is a perspective view of one embodiment of a frame 300 for use as frame 118 of FIG. 1A to position a set of microtargets for the system of FIG. 1A. FIG. 3B further illustrates frame 300 mounted on membrane-based vibration drive 302, which is one embodiment of vibration drive 120 of FIG. 1A. Vibration drive 302 is capable of generating sufficient amplitude to move the microtargets through the entire measurement volume of an OPS under test in the direction of arrow 310. It is noted that the vibration amplitude and frequency can be adjusted to meet the characteristics of a particular OPS such as dimensions of measurement volume or maximal allowed duration of single particle response. For example, in one embodiment, the vibration amplitude is about 2 millimeters (mm) to enable the microtarget to pass through the entire measurement volume of a sensor with a measurement volume of about 1 mm. In one embodiment, the vibration frequency is chosen to be approximately 50 Hz as this frequency provides stability of motion of the microtargets in assembled test system prototypes. Other frequencies and amplitudes can be selected basing on the sensor under test. It is also possible to move the microtarget in discrete steps and measure microtarget optical response while it is motionless.

As shown in FIG. 3A, frame 300 is fabricated in the form of a rectangle with an opening 304 in the middle and grooves on inner sides for receiving carrier 306 with microtargets 308 formed thereon. Carrier 306 and microtargets 308 correspond to carrier 116 and microtargets 113 of FIG. 1A. In this embodiment, frame 300 is tilted at an angle from front to back to accommodate the orientation of the incident light exiting the OPS that is being tested. Specifically, the tilt angle is selected so that incident light (laser beam 124) from laser 104 is reflected directly to detector 106 following the optical axis 121 of the detector 106. In other embodiments, the frame has other orientations that allow the microtargets to be oscillated through the entire measurement volume of a particular OPS to be tested, e.g., with no tilt so that the microtargets 113 oscillates on the same path as followed by real particles in real measurements. In other embodiments, the angle of tilt to frame 300 can be adjusted based on the OPS under test.

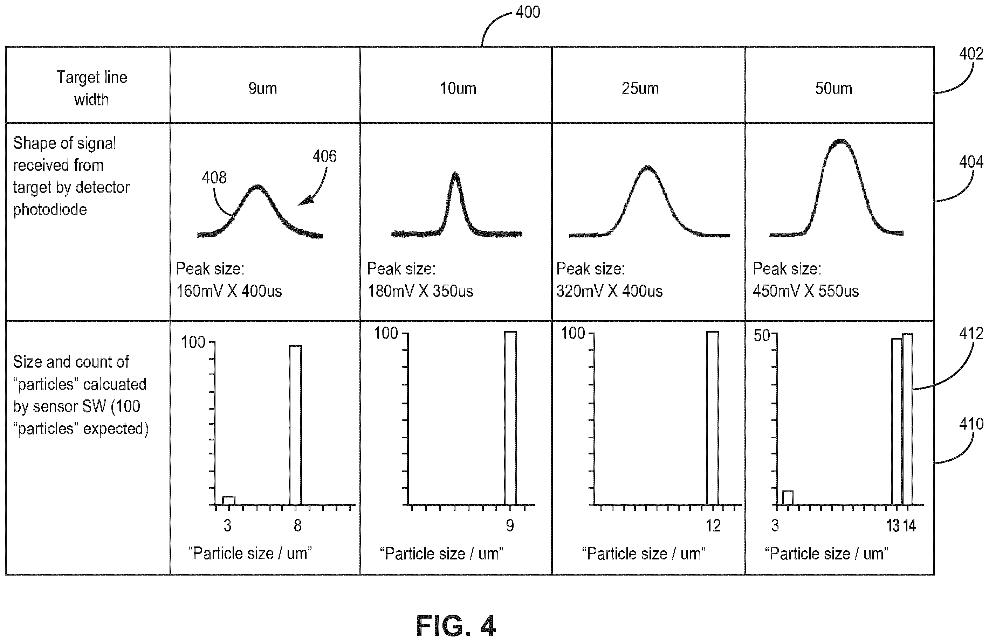

FIG. 4 illustrates table 400 including data output by the system 100 of FIG. 1A for various size of line microtargets 113 that are oscillated through the center of measurement volume 108 of OPS 102. In the set of data in table 400, row 402 indicates the size of microtarget 113 (in microns) tested to produce the data in each column. Row 404 includes a graph 406 for the microtarget size of that column that illustrates a curve 408 generated by the output of detector 106 of OPS 102. The peak size of curve 408 is indicated along with the duration of the signal. This data is correlated to the size of the "particle" detected by the OPS 102 and processed by processing system 128 in row 410 of table 400. When the microtarget 113 is oscillated with frequency 50 Hz through measurement volume 108, OPS 102 detects 100 particles as the "particle" passes two times through measurement volume during one oscillation. Row 410 includes chart 412 in each column that indicates the number of particles of each size detected by OPS 102. In the column for the 9-micron microtarget, chart 412 indicates just under 100 particles of 8 microns along with a small number of particles of other sizes. Deviations from 100 particles detected by OPS 102 are accounted for by false positive and false negative detections. It is noted that those other particles represent noise that could be due to imperfections in the surface of carrier 116 causing extraneous input from reflections into the detector 106 from the surface of the carrier 116. It is noted that in column for the 50-micron microtarget, the amplitude of the optical response was very close to the boundary between 13-micron and 14-micron water droplet. Therefore, approximately 50% of the particles were marked as 13-micron and the other approximately 50% of the particles were marked as 14-micron. It is further noted that OPS 102 detected particle sizes that are different from the actual size of the microtargets. This is due to differences in the reflectivity and other properties of the microtargets compared to the particles to be detected by OPS 102. When these differences in materials are accounted for, the data from OPS 102 (the calculated characteristic, e.g., size) can be used, along with the known characteristic to calculate calibration coefficients to enable OPS 102 to accurately detect characteristics of particles during operation.

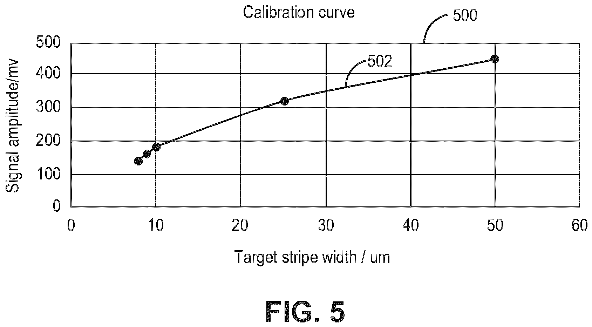

FIG. 5 is a graph 500 illustrating a calibration curve 502 based on the data from FIG. 4.

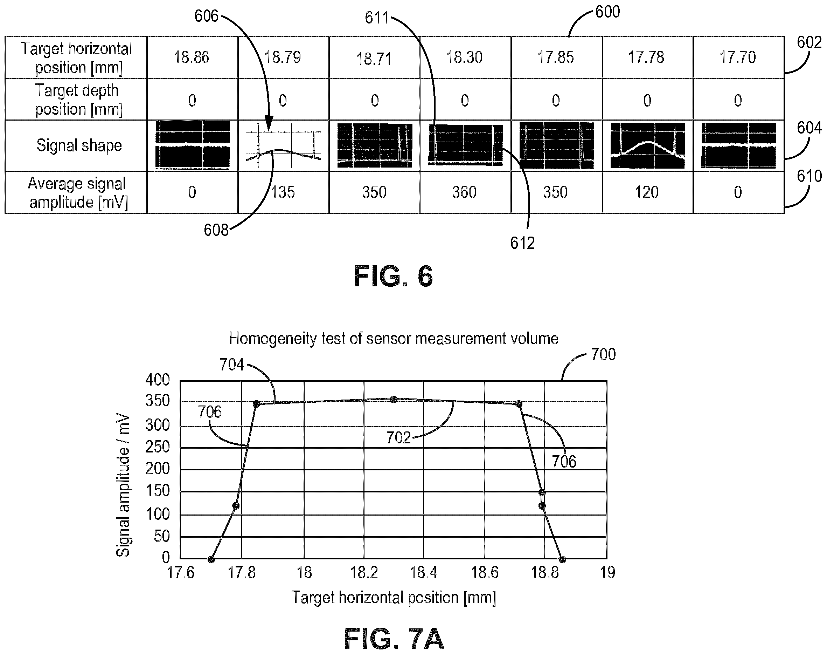

FIG. 6 illustrates table 600 including data that maps the measurement volume 108 of the system of FIG. 1. The measurement volume of OPS 102 is tested using a dot microtarget to verify the homogeneity of the sensor response of OPS 102 over the measurement volume 108. The measurement started from a position which is out of sensor sampling range 142, and the microtarget 113 was moved through the laser beam 124. Background optical response is measured. When the microtarget 113 is moved to the sensor sampling range 140 and microtarget 113 is moved through the laser beam 124, an optical response in the shape of a peaks 611, 612 is measured. Finally, the microtarget 113 is moved out of sensor sampling range 140 and background optical response is measured again. While microtarget 113 crosses laser beam 124 twice per vibration period, two peaks 611, 612 are detected. If dependence of peaks amplitude on target carrier position is put into a graph, the test produces a cross-section of measurement volume 108 (curve 702 in graph 700 of Figure 7A). In curve 702, the top 704 is substantially flat and the edges 706 are substantially steep over measurement volume 108.

To produce curve 702, measurements are taken with OPS 102 with the microtarget 113 moved through a plurality of horizontal positions (distances) from OPS 102. The test result examples at various distances are shown in table 600. In row 602, the distance from the OPS 102 to the target is recorded (horizontal position). The target vertical position needs to be adjusted slightly during the measurement, as the optical response occurs only when microtarget 113 crosses through the laser beam 124. In row 604, graph 606 is included for the distance associated in row 602 for that column. Graph 606 includes curve 608 that illustrates the reading from the sensor for the target at that distance. It is noted that the non-flat shape of curve 608 base is due to the imperfections in the version of the carrier for the microtarget used in this test. In general, the sensor treats the low-frequency signal as bias, which could be caused by solar background for example, therefore only the peaks 611, 612 with transition time below minimum defined threshold are considered to be aerosol particles. The signal amplitude is recorded in row 610 and is captured in curve 702 of graph 700. It is noted that curve 702 has a substantially flat middle portion at about 350 mV between about 17.85 mm and 18.71 mm.

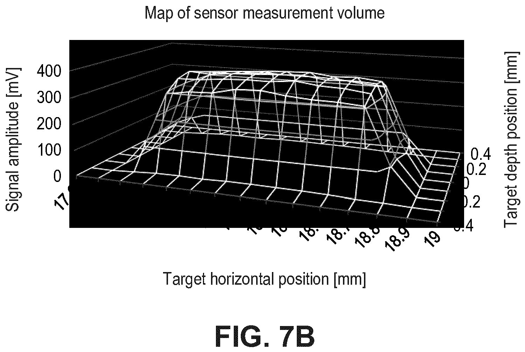

To map measurement volume 108 of OPS 102 in three dimensions, the previously described measurement for microtarget 113 are performed having multiple depth positions. Depth position represents microtarget position within the laser beam flat-top window width 204. Depth axis would be perpendicular to a plane defined by receiving optical axis 121 and vibration motion axis 119, meaning the microtarget would be moved in direction or out of direction to the computer screen or a paper. Performing such a measurement results and showing the results in a wireframe 3D surface graph shown on FIG. 7B. The graph of FIG. 7B validates the horizontal size of measurement volume 108 which is approximately 1.0 mm for the current example. Additionally, the graph of FIG. 7B also validates depth size of measurement volume 108, which is approximately 0.4 mm for the current example. The third dimension of measurement volume is given by movement of microtarget 113 through the laser beam Gaussian profile 207. To test the laser beam Gaussian profile, microtarget 113 having size significantly smaller than the laser beam Gaussian width can be used, therefore its optical response would be proportional to laser beam flux density. Such measurements can be seen as peaks 611, 612 in curve 608 of FIG. 6.

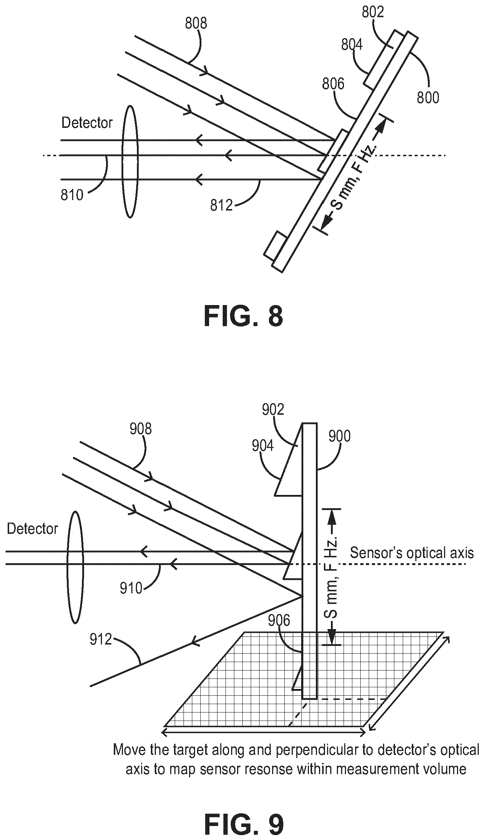

FIG. 8 is a side view of an embodiment of a carrier 800 with a plurality of microtargets 802 formed on a surface of carrier 800. This embodiment of carrier 800 includes microtargets 802 formed of a reflective material, such as metal, that are spaced apart on the surface of carrier 800. Surface 804 of microtargets 802 is substantially flat and is parallel to surface 806 of carrier 800. Size of microtargets 802 could vary to represent particles of different size and enable OPS calibration using single carrier 800. Distance between the microtargets 802 is to be selected so, that only one microtarget 802 will enter measurement volume 108 of OPS 102 at a time.

FIG. 8 illustrates a possible source of error for the system for testing an optical particulate sensor, e.g., system 100 of FIG. 1. As illustrated, an OPS under test illuminates the carrier 800 and microtargets 802 with incident light 808. Incident light 808 is reflected by both surface 804 of microtargets 802 (reflected light 810) as well as surface 806 of carrier 800 (reflected light 812). The detector of the OPS under test will receive both reflected light 810 from surface 804 of microtargets 802 as well as reflected light 812 from surface 806 of carrier 800. Unfortunately, the inclusion of light 812 from surface 806 of carrier 800 will introduce error into the output of the OPS under test.

FIG. 9 is a side view of another embodiment of a carrier 900 with a plurality of microtargets 902 formed on a surface of carrier 900. This embodiment of carrier 900 includes microtargets 902 formed of a reflective material, such as metal, that are spaced apart on the surface of carrier 900. Surface 904 of microtargets 902 is formed at an angle to surface 906 of carrier 900 such that microtargets 902 have a triangular cross-section that reduces the potential error of the microtargets 802 of FIG. 8. In this embodiment, incident light 908 that reflects off from surface 906 of carrier 900 is reflected away from the detector of the OPS under test as illustrated by reflected light 912 whereas incident light 908 that reflects off from surface 904 of microtarget 902 enters the detector of the OPS under test as indicated by reflected light 910. Thus, by angling the surface 904 of the microtargets 902 relative to the surface 906 of carrier 900, the detector does not receive light reflecting off surface 906 of carrier 900. Thereby removing a source of error for the detector of the OPS under test.

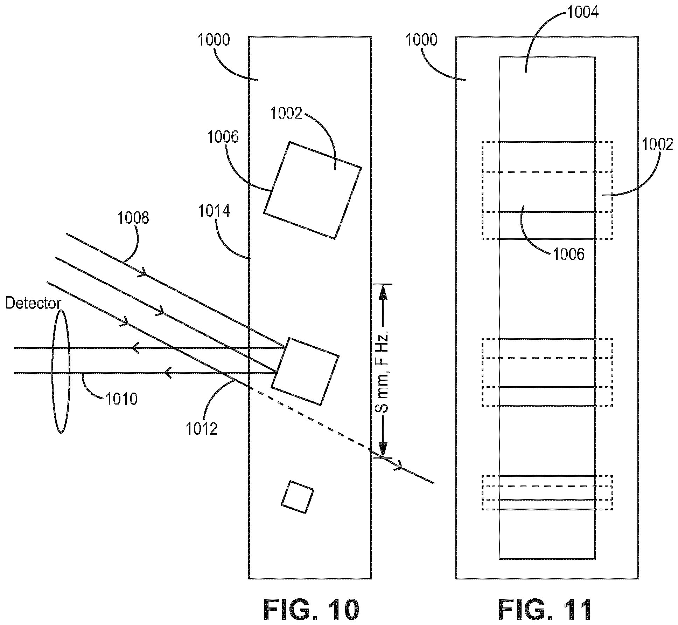

FIG. 10 is a side view of another embodiment of a carrier 1000 with a plurality of microtargets 1002 for use in the system of FIG. 1. FIG. 11 is a front view of one embodiment of the target of FIG. 10. In this embodiment, unwanted reflections from carrier 1000 are reduced by forming microtargets 1002 by stretching calibrated, metallic wires or bars of cross-section with flat surface turned towards incident light across an opening 1004 in the carrier 1000 so that light that does not reflect from the microtargets 1002 passes through carrier 1000. As shown in FIG. 10, incident light 1008 from the OPS under test is directed at a portion of carrier 1000. Some of incident light 1008 is reflected back toward the detector of the OPS under test as indicated by reflected light 1010 by surface 1006 of the microtarget 1002 in use for the test. However, due to opening 1004, incident light 1008 that is near the selected microtarget 1002 passes through opening 1004 of carrier 1000 and is not inadvertently reflected into the detector of the OPS under test thereby improving the operation of the system of FIG. 1 to test or calibrate the OPS under test.

In this embodiment, surface 1006 of microtargets 1002 may also be angled relative to surface 1014 of carrier 1000.

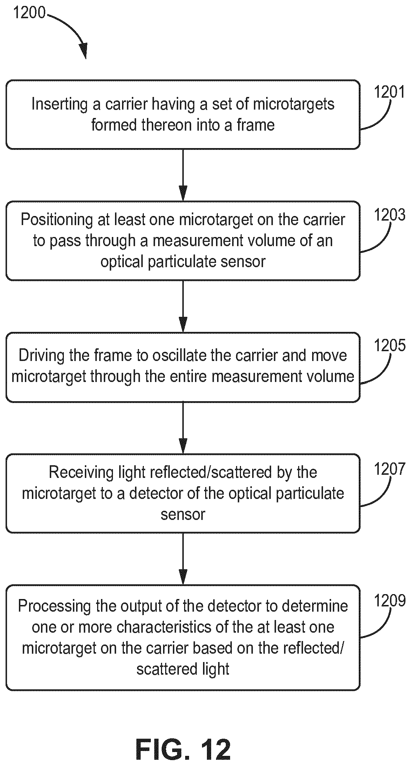

FIG. 12 is a flow chart of an embodiment of a process 1200 for testing an optical particulate sensor (OPS). In one embodiment, process 1200 uses system 100 of FIG. 1 to test the OPS. However, process 1200 is not limited to use of system 100 and can be implemented with any appropriate system that uses microtargets to simulate particles in the working volume of the OPS.

Process 1200 includes Inserting a carrier having a set of microtargets formed thereon into a frame at block 1201. Additionally, process 1200 positions at least one microtarget on the carrier to pass through a measurement volume of the optical particulate sensor at block 1203. This positioning may include, in some embodiments, selecting one of the set of microtargets for detection by the OPS. To detect the microtarget, process 1200 drives the frame to oscillate the carrier and move the selected microtarget through the entire measurement volume of the OPS at block 1205. It is noted that the Vibration amplitude should be large enough to allow the microtarget to leave the measurement volume on both ends of the vibration. Further, process 1200 receives light reflected/scattered by the microtarget to a detector of the optical particulate sensor at block 1207. In some embodiments, the microtargets on the carrier are designed as described with respect to any of FIGs. 9, 10 and 11 to help reduce light reflected/scattered by the carrier from being picked up by the detector of the OPS. Process 1200 also includes processing the output of the detector to determine one or more characteristics (such as size) of the at least one microtarget on the carrier based on the reflected/scattered light at block 1209. By comparing the calculated characteristic with the known characteristic of the microtarget, calibration coefficients could be calculated and, with correction based on material differences (microtarget versus anticipated particles) could be used in OPS during normal operation to improve the performance of OPS.

### Rotating Carrier

The embodiments of the system for testing and calibrating an OPS described above use a vibration drive to move the carrier up and down through a measurement volume in a linear manner through a measurement volume. In such embodiments, due to the finite sample size, the oscillation frequency and amplitude are limited. Typically, the linear velocity can reach about 10 meters per second (m/s). When the oscillation reaches the largest displacement position, the linear velocity reduces to zero and the calibration target is out of sensor measurement volume. The calibration is conducted when the linear velocity reaches its maximum, the sampling time is therefore relatively limited. Test and calibration device based on vibrating microtarget carrier could be made compact and durable in rough test conditions such as testing the sensor installed in the aircraft. The disadvantages of such solution are above mentioned limited maximum target velocity and possible negative influence of vibrations on test results if larger/heavier carrier containing several sets of microtargets of different sizes is used. To avoid above-mentioned disadvantages a rotating carrier-based solution is proposed as described below. Rotating carrier-based solution might provide higher microtarget speed and is free of vibrations, but is obviously more complex, is bulkier and might be less durable in rough usage conditions, than vibrating carrier-based solution.

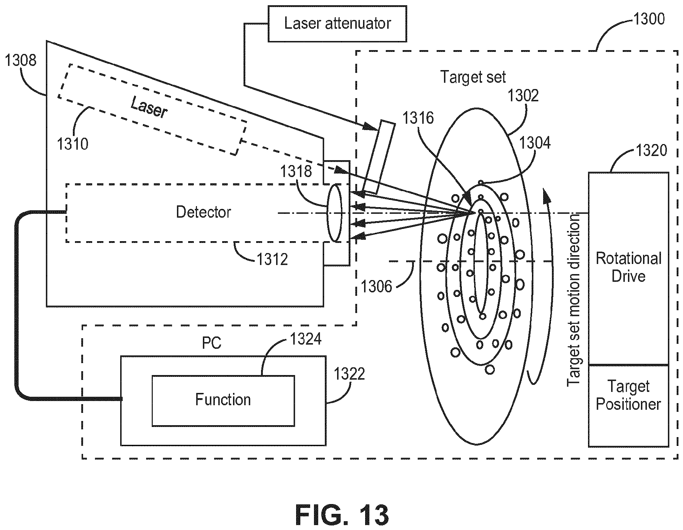

FIG. 13 is a block diagram of one embodiment of a system 1300 for testing and calibrating an OPS 1308 that enables simulation of particles that travel at speeds in excess of 30 m/s. In this embodiment, system 1300 includes a carrier 1302 of circular or disk shape that has a plurality of microtargets 1304 formed thereon in concentric circles or follows particular orders or patterns. System 1300 includes a rotational drive 1320 that causes carrier 1302 to rotate such that plurality of microtargets 1304 spin around a central axis 1306 of carrier 1302. The plurality of microtargets 1304 on carrier 1302 have a selected particle size and shape to be measured. In a (preferred) embodiment, a section of carrier 1302 has a particular arrangement of the particles size, shape and order, which enables quick and accurate determination of alignment to the sampling range and measurement volume. Since the particle size is known and can be accurately controlled and the speed of the disk is also known, the linear velocity of the plurality of microtargets 1304 can be also accurately controlled. Advantageously, system 1300 provides a valid solution to enable fast and accurate measurement of particles moving at speeds in excess of 30 m/s, introducing almost zero vibrations and allowing plurality of calibration microtargets to be integrated onto a compact carrier.

As with the embodiments described above, system 1300 is designed to test and calibrate OPS 1308. OPS 1308 includes laser 1310 ("transmitting optics") and detector 1312 ("receiving optics" 1318). Laser 1310 of OPS 1308 irradiates measurement volume 1316 with light. Particles in measurement volume 1316 cause the light from laser 1310 to reflect/scatter back toward OPS 1308. This reflected/scattered light passes through optics 1318 into detector 1312 which includes a photodetector that measures the amount of light reflected by any particles present in measurement volume 1316. Detector 1312 produces an output signal, based on the response of the photodetector which is provided to system 1300 to determine particle size and composition based on this reflected light. Different types of materials may have different reflection amplitudes for the same particle size. To achieve high throughput and accurate measurements suitable for manufacturing and field testing, system 1300 rotates plurality of microtargets 1304 through measurement volume 1316 at sufficient speeds to simulate real-world conditions.

In one embodiment, carrier 1302 (wafer or disk) is mounted on a spindle motor (rotational drive 1320) and rotated at high speed that can vary between 3,600 to 15,000 rotations per minute (RPM), which can easily create a consistent linear velocity exceeding 30 m/s. It is noted that the speed at which a set of microtargets 1304 moves will depend on how far the set of microtargets is located from the center of the disk or wafer of carrier 1302. For example, system 1300 causes microtargets 1304 to move with a selected speed through the measurement volume 1316 by selectively aligning microtargets that are disposed on carrier 1302 at the correct distance from the center of the wafer or disk.

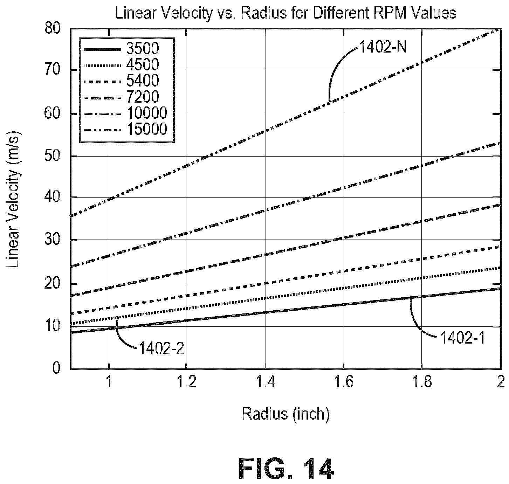

FIG. 14 is a graph that illustrates an exemplary relationship between linear velocity of microtargets 1304 and a radius of the rotating wafer or disk (carrier 1302) of FIG. 13. The radius at which the microtargets are formed in plotted along the X-axis while the linear velocity is plotted along the Y-axis. The various lines 1402-1 to 1402-N reflect spinning wafer or disk (carrier 1302) at different numbers of rotations per minute (from 3,600 to 15,000 RPM). The results show that by simply increasing the distance from the center of the disk and the disk rotation speed, one can conduct measurements with a sample velocity between 10 and 80 m/s.

In one embodiment, rotational drive 1320 includes a spindle motor that has low power consumption and can be driven to enable RPM at the values shown in FIG. 14. The characterization is conducted without OPS 1308 touching the rotating samples; thus, a reliable source of preset particle size and shape can be utilized to enable accurate measurement.

### Calibration and Testing of Measurement Volume

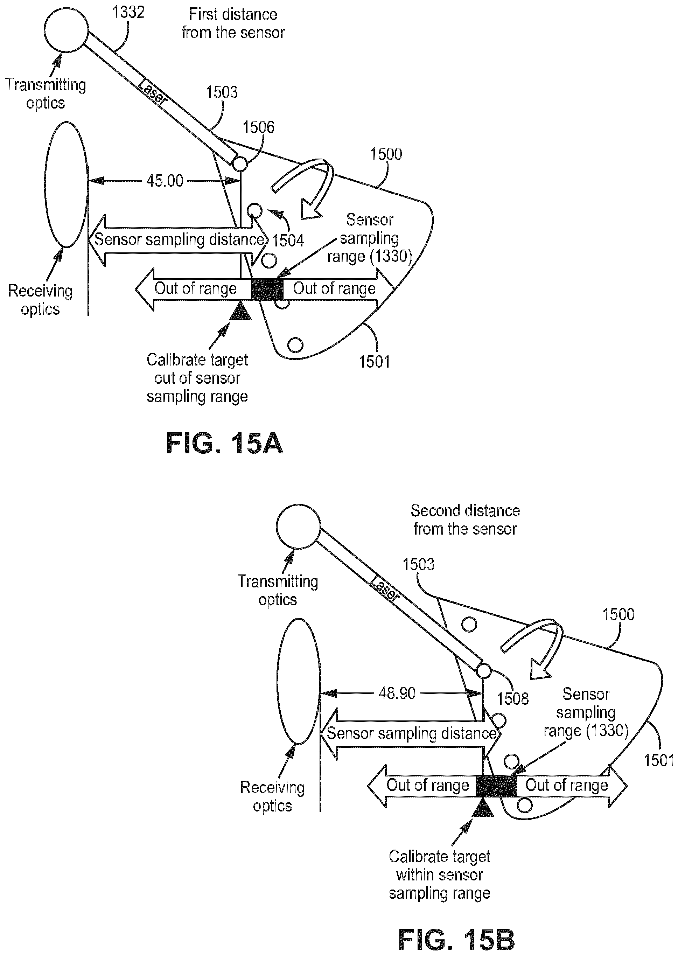

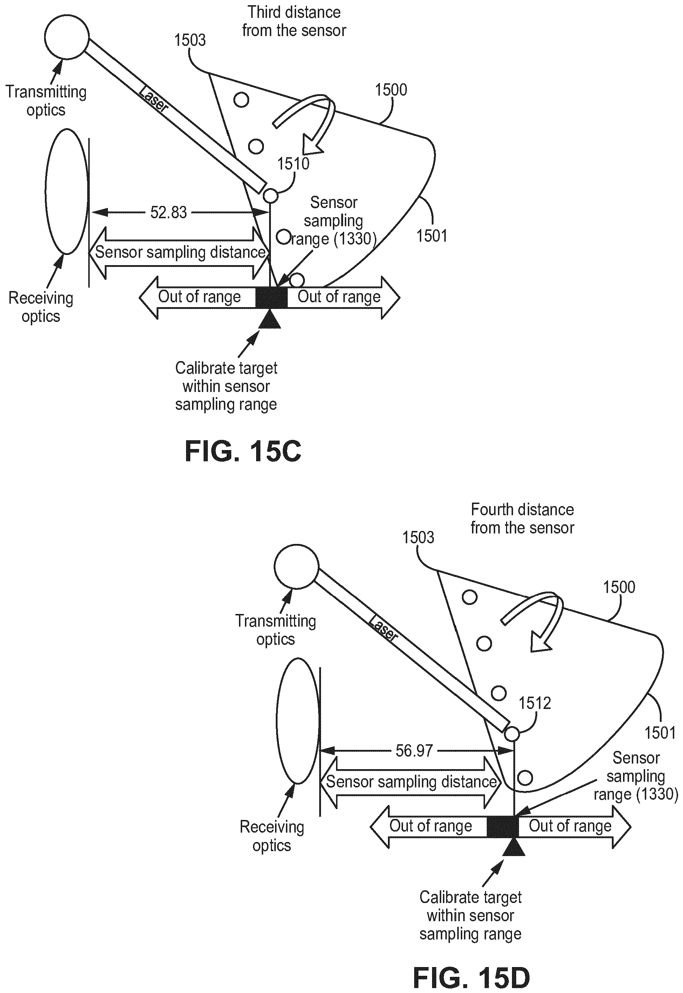

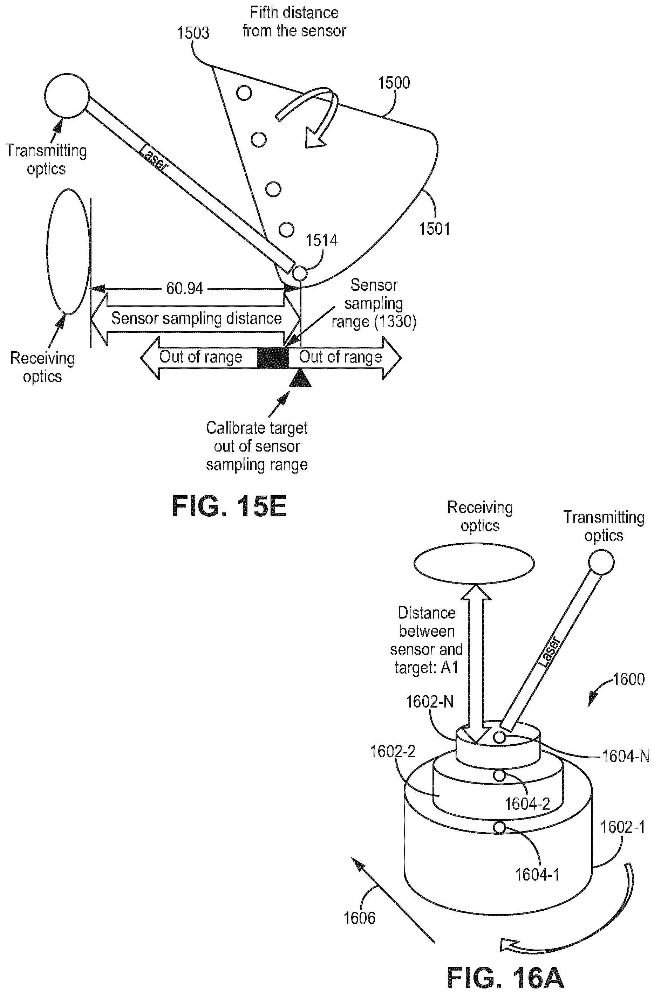

As described above, OPS 1308 is designed to monitor measurement volume 1316 for the presence of particles within measurement volume 1316 and to properly determine the particle type, size, and other characteristics of the particles. System 1300 is designed to test and calibrate OPS 1308 for proper operation in the measurement volume 1316 (three dimensional); not just in a plane. To facilitate this function, another embodiment of carrier 1302 is provided by carrier 1500 shown in FIGs. 15A, 15B, 15C, 15D and 15E.

In this embodiment, carrier 1500 has a conical shape. A plurality of microtargets 1504 is formed on a surface of carrier 1500 between base 1501 and vertex 1503 of carrier 1500. In the embodiment shown, microtargets 1504 are formed in a row between vertex 1503 and base 1501 of carrier 1500. Carrier 1500 enables testing and calibration of the entire measurement volume 1316 by moving carrier 1500 up and down (vertically) so that a laser 1310 of OPS 1308 is focused on a subset of the plurality of microtargets 1504 as that subset of the plurality of microtargets 1304 passes through measurement volume 1316 at a different distance from OPS 1308. For example, as shown in FIG. 15A, a subset of plurality of microtargets 1304, represented by microtarget 1506, is out of sensor sampling range 1330, therefore out of sensor measurement volume 1316. The laser of OPS 1308 is able to irradiate microtarget 1506 as it rotates on carrier 1500 out of measurement volume 1316. In this example, the position of microtarget 1506 is 45.00 mm from OPS 1308. Detector 1312 of OPS 1308 should not detect microtarget 1506 out of measurement volume 1316 or it should identify it as an invalid measurement.

As carrier 1500 moves up, as shown in FIG. 15B, microtarget 1508 moves into sensor sampling range, therefore into measurement volume 1316 and is irradiated by the laser 1310 of OPS 1308 as microtarget 1508 rotates with the surface of carrier 1500 through measurement volume 1316. In this example, the position of microtarget 1508 is 48.90 mm from OPS 1308. Detector 1312 of OPS 1308 should detect calibration target as a valid particle and provide an accurate measurement. Microtarget 1508 is at the edge of sensor sampling range 1330 of measurement volume 1316.

As carrier 1500 moves up, as shown in FIG. 15C, microtarget 1510 moves into sensor sampling range 1330, therefore into measurement volume 1316 and is irradiated by laser 1310 of OPS 1308 as microtarget 1510 rotates with the surface of carrier 1500 through measurement volume 1316. In this example, the position of microtarget 1510 is 52.83 mm from OPS 1308. Detector 1312 of OPS 1308 should detect microtarget 1510 as a valid particle and provide an accurate measurement. Microtarget 1510 is in the center of sensor sampling range 1330 of measurement volume 1316.

As carrier 1500 moves up, as shown in FIG. 15D, microtarget 1512 moves into sensor sampling range 1330, therefore into measurement volume 1316 and is irradiated by laser 1310 of OPS 1308 as microtarget 1512 rotates with the surface of carrier 1500 through measurement volume 1316. In this example, the position of microtarget 1512 is 56.97 mm from OPS 1308. Detector 1312 of OPS 1308 should detect microtarget 1512 as a valid particle and provide an accurate measurement. Microtarget 1512 is at the edge of sensor sampling range 1330 of measurement volume 1316.

Finally, as shown in FIG. 15E, as carrier 1500 moves further up, microtarget 1514, which is out of sensor sampling range 1330, and therefore out of measurement volume 1316, is irradiated by laser 1310 of OPS 1308. Laser 1310 of OPS 1308 is able to irradiate microtarget 1514 as it rotates on carrier 1500 out of measurement volume 1316. In this example, the position of microtarget is 60.94 mm from OPS 1308. OPS sensor should not detect a calibration target out of measurement volume 1316 or it should identify it as an invalid measurement. In this manner, the shape of carrier 1500 and the placement of plurality of microtargets 1504 on carrier 1500 of system 1300 enables testing and calibrating OPS 1308 over the entire measurement volume by simply moving carrier 1500 up and down.

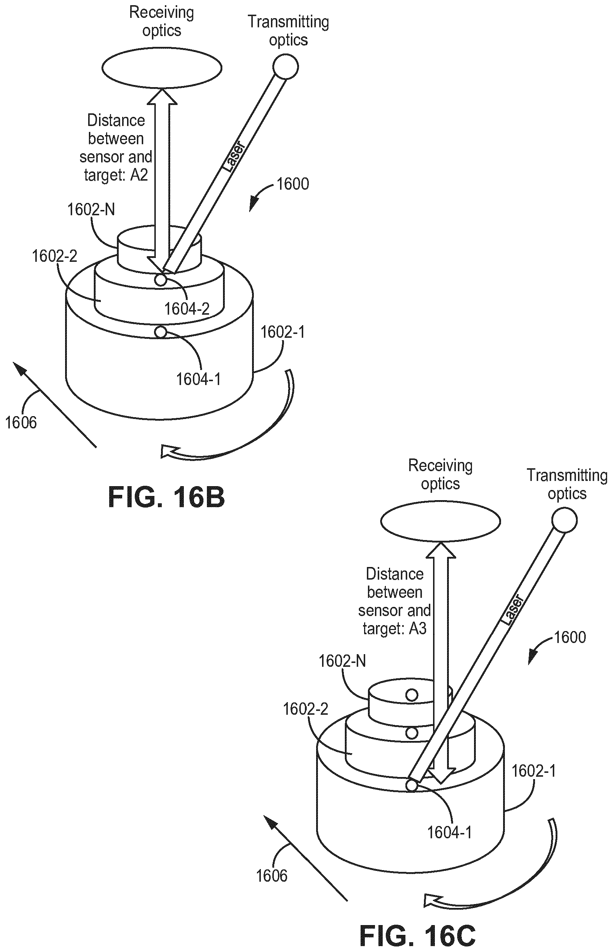

FIGs. 16A, 16B, 16C illustrate a perspective view of another embodiment of a carrier 1600 that enables testing and calibrating the entire measurement volume 1316 of OPS 1308 with movement (oscillation) of carrier 1600 in one direction. Carrier 1600 is formed from a plurality of concentric cylinders 1602-1 to 1602-N. The plurality of concentric cylinders 1602-1 to 1602-N are stacked to simulate a conical shape. Each of the plurality of concentric cylinders 1602-2 to 1602-N has a smaller width compared to the width of the one of the plurality of concentric cylinders 1602-1 to 1602-N on which it is stacked. Further, each of concentric cylinders 1602-1 to 1602-N has a microtarget 1604-1 to 1604-N formed on a respective (e.g., top) surface thereof, near and edge of the cylinder. The carrier 1600 and the microtarget 1604-1 to 1604-N function in the same manner as described above with respect to carrier 1500 and FIGs. 15A to 15E to test and calibrate the entire measurement volume 1316. For example, carrier 1600 is configured to be translated back and forth (1606) in a plane parallel to the base of the plurality of concentric cylinders 1602-1 to 1602-N. The plurality of concentric cylinders 1602-1 to 1602-N is further configured to rotate around a center axis of the concentric cylinders.

FIG. 16A shows microtarget 1604-N which is in distance A1 from OPS 1308 is irradiated by laser 1310 and reflects / scatters light into detector 1312 of OPS 1308. As carrier 1600 moves into the direction indicated by arrow 1606, microtarget 1604-2 which is a distance A2 from OPS 1308 (as shown in FIG. 16B) is irradiated by laser 1310 and reflects / scatters light into detector 1312 of OPS 1308. As further shown in FIG. 16C, as carrier 1600 moves further in the direction of indicated by arrow 1606, microtarget 1604-1 which is a distance A3 from OPS 1308 is irradiated by laser 1310 and reflects / scatters light into detector 1312 of OPS 1308. Distance A1 is shorter than distance A2. Distance A2 is shorter than distance A3. It is clearly visible that distance to the sensor can be changed by linear translation of carrier 1600.

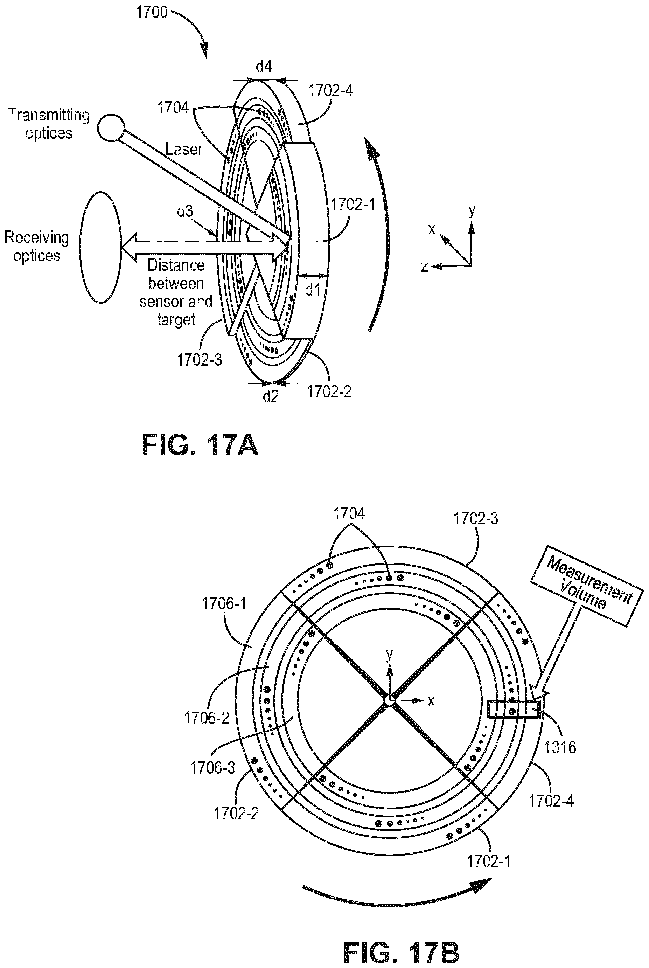

FIG. 17A is a perspective view and FIG. 17B is a top view of another embodiment of a disk or wafer shaped carrier that enables testing and calibration over the entire measurement volume 1316 of OPS 1308. In this embodiment, carrier 1700 is formed on a disk or wafer that has four parts or sections 1702-1 to 1702-4. Each section 1702-1 to 1702-4 has a different depth (d1, d2, d3, and d4, respectively). Further, each section 1702-1 to 1702-4 has a plurality of targets 1704 formed thereon. As shown best in FIG. 17B, targets 1704 vary in size and are formed in clusters on concentric rings on the surface of carrier 1700. Advantageously, carrier 1700 enables testing and calibration of the entire measurement volume 1316 with only rotation of carrier 1700. No translation is required. The differing depths of section 1702-1 to 1702-4 enables testing and calibration of OPS 1308 over the entire measurement volume 1316 because plurality of targets 1704 on section 1702-1 to 1702-N are at varying distances from OPS 1308.

In this embodiment, carrier 1700 includes three concentric rings 1706-1 to 1706-3 with targets 1704 formed thereon. In other embodiments, any appropriate number of concentric rings in included in carrier 1700. Further, carrier 1700 is positioned relative to OPS 1308 such that measurement volume 1316 covers at least portions of multiple of the concentric rings. Each ring 1706-1 to 1706-N further includes targets 1704 that, when carrier 1700 is rotated, pass through measurement volume 1316 at different positions in planes parallel to the X-Y plane. Further, by having sections 1702-1 to 1702-4 at different heights (along the Z axis), targets 1704 also pass through the measurement volume at different distances from OPS 1308. Thus, carrier 1700 moves targets in three dimensions through measurement volume 1316. To increase the coverage of measurement volume 1316, targets 1704 on each of rings 1706-1 to 1706-3 are formed of varying sizes, and are arranged with targets at points across the ring to cover a substantial portion of the width of the ring. In the embodiment of FIG. 17A, 17B targets 1704 are shown in clusters of targets of varying size. This is shown by way of example, and not by way of limitation. It is understood that in other embodiments, targets 1704 may be formed in other orientations so long as the targets 1704 enable carrier 1700 to move targets through measurement volume 1316 in a manner to test the three dimensions of the measurement volume, as well as the targets 1704 enable carrier 1700 to move targets through laser beam 124 out of measurement volume 1316 in a manner to test the sensor capability to reject the aerosol optical response out of measurement volume 1316.

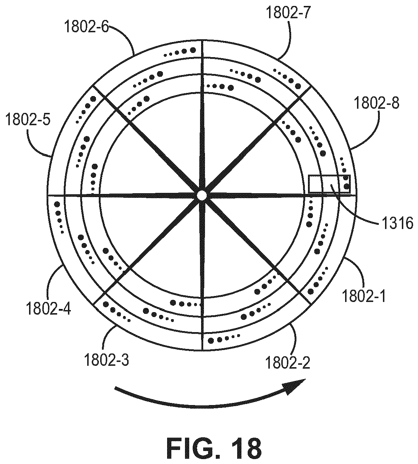

FIG. 18 is a top view of an alternative embodiment of a carrier 1800 similar to carrier 1700 of FIG. 17A. Carrier 1800 has eight parts or sections rather than 4 parts or sections as shown in FIGs. 17A and 17B. The embodiment of FIG. 18 may prove to be more stable when carrier 1800 rotates by forming sections of similar thickness on opposite sides of carrier 1800. For example, section 1802-1 and 1802-5 would have similar thickness. Other pairs of similar thickness would include: 1802-2 and 1802-6, 1802-3 and 1802-7, and 1802-4 and 1802-8.

### Additional Testing Functionality

Returning to FIG. 13, in some embodiments, system 1300 also includes functions and hardware to enable testing health status of OPS 1308 such as lens alignment, laser beam alignment with receiving optics, etc. To accomplish this, OPS 1308 is coupled to computer 1322 that is programmed with functions 1324 appropriate to analyze the output of OPS 1308 to determine the health status of OPS 1308.

**In** one embodiment, system 1300 includes a source of short pulses of light that is integrated into the calibration tool, and which emulates optical response of fast particle transitions. Although the calibration and testing system 1300 is capable to generate microtarget speed of tens meters per second, the commercial aircrafts may reach airspeed of hundreds of meters per second and military platforms are capable to fly even faster. In one commercial aircraft sensor implementation, optical response peak duration may be as short as 120 nanoseconds. The emulation of fast particle transitions by illuminating the detector 1312 with short pulses of light allows to validate sensor capability to respond to very fast particle transitions which occur during the flight.

**In** other embodiments, functions 1324 of system 1300 includes a function that assists in determining if light polarization subsystem in transmitter and receiver of OPS 1308 are functioning properly. The test should contain two subtests:
a) transmitter test: system 1300 is receiving the beam from laser 1310 and verifies that laser beam polarization degree is linear and polarization plane orientation is as expected;
b) receiver test: system 1300 is transmitting linearly polarized light to detector 1312 of OPS 1308, system 1300 is rotating polarization plane of transmitted light and is verifying, that one receiver channel of OPS 1308 is receiving s-polarization only and another channel of OPS 1308 is receiving p-polarization only.

In other embodiments, functions 1324 of system 1300 includes a function that measures the wavelength of the laser beam received from OPS 1308. The function further analyzes a difference between a target wavelength and the measured wavelength. If the function detects a shift in the wavelength of the laser beam, the function may flag the laser module as aging or damaged.

In other embodiments, a solar background light source is integrated into system 1300 to enable system 1300 to test the resistance of OPS 1308 to solar background radiation. To this end, system 1300 irradiates OPS 1308 with light from the solar background light source during operation of OPS 1308. Functions 1324 of system 1300 include a function that monitors the resistance of OPS 1308 to solar background radiation from the solar background light source integrated into system 1300.

In other embodiments, functions 1324 of system 1300 includes a function that identifies laser beam profile area and its intensity for OPS 1308.

In other embodiments, functions 1324 of system 1300 includes a function that identifies shifts in laser beam optical axis position. If the function determines that the shift exceeds a defined threshold, the function triggers an error flag.

In other embodiments, functions 1324 of system 1300 includes a function that validates laser beam angle of incidence. If optical response exists in target positions where the laser beam should not be positioned, the function flags a possible sensor calibration error.

In another embodiment, each circular track with the same radius on the carrier 1302 can be further divided into multiple regions, with different particles size, shape and order, which enables quick and accurate calibration to be completed.

It is noted that test and calibration methods described here could be implemented only with the aid of externally (to sensor) controlling equipment and sensor will be controlled/operated by that equipment providing special test related data to OPS 1308. In other embodiments, special test/calibration firmware may replace the normal operation code stored in OPS 1308 with the test/calibration firmware used for the time of testing of OPS 1308. When OPS 1308 returns to normal operation, the test/calibration firmware is replaced with the normal operation code.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory or other non-transitory computer readable medium. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs) or Field Programmable Gate Arrays (FGPAs).

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a system for calibration and testing an optical particulate sensor, the system comprising: a carrier having at least one microtarget that is configured to emulate a particle; a frame, configured to receive the carrier, the frame further configured to position the at least one microtarget to pass through a measurement volume of the optical particulate sensor; a drive, coupled to the frame, that is configured to move the frame such that the at least one microtarget on the carrier moves through three dimensions of the measurement volume, such that a light beam from the optical particulate sensor is reflected/scattered toward the optical particulate sensor; and at least one processor configured to determine one or more characteristics of the at least one microtarget on the carrier based on the reflected/scattered light.

Example 2 includes the system of example 1, wherein the at least one microtarget comprises at least one reflective line of known width and/or at least one reflective dot of known diameter and/or at least one reflective two-dimensional or three-dimensional structure of known size that is formed on a layer of optically transparent material.

Example 3 includes the system of example 2, wherein the at least one reflective line and/or the at least one reflective dot has a triangular cross section.

Example 4 includes the system of any of examples 1 to 3, wherein the carrier comprises an opening and wherein the at least one microtarget comprises a wire stretched out in free space in the opening.

Example 5 includes the system of any of examples 1 to 4 and further comprising an interface that is adapted to be coupled to a window associated with the optical particulate sensor.

Example 6 includes the system of any of examples 1 to 5 and further comprising a communication interface between the system and the optical particulate sensor that is configured to communicate data between the system and the optical particulate sensor.

Example 7 includes the system of any of examples 1 to 6, further comprising a light conditioning subsystem that modifies the light beam incident on a microtarget, wherein the light conditioning subsystem comprises an optical attenuator which is configured to reduce incident power of the light beam and/or a half-wave plate which is configured to rotate polarization of the light beam by 90 degrees.
Example 8 includes the system of any of example 1 to 7, wherein the microtargets are positioned to enable testing and calibrating a position and size of the measurement volume of the optical particle sensor, as well as testing optical particulate sensor capability to reject measurements outside the measurement volume.

Example 9 includes the system of any of examples 1 to 8, wherein the drive is configured to change frame position within the measurement volume while the carrier rotates.

Example 10 includes the system of example 9, wherein the carrier has a conical shape and wherein the at least one microtarget comprises a plurality of microtargets disposed in a row between a vertex and a base of the carrier.

Example 11 includes the system of example 10, wherein the conical shape of the carrier is implemented as a stack of concentric cylinders of decreasing size from bottom to top of the carrier.

Example 12 includes the system of example 11, wherein the at least one microtarget includes a microtarget formed on a top surface of each of the concentric cylinders, near an edge of the concentric cylinder.

Example 13 includes the system of example 11, wherein the carrier is configured to be translated in a plane parallel to the base of the stack of concentric cylinders and the stack of concentric cylinders is further configured to rotate around a center axis of the stack of concentric cylinders.

Example 14 includes a system for calibration and testing an optical particulate sensor, the system comprising: a disk-shaped carrier having a substantially circular surface facing the optical particulate sensor; wherein the carrier is divided into a plurality of sections, each section having a height such that the surface of each section passes through a measurement volume of the optical particulate sensor at a selected distance from the optical particulate sensor; wherein the carrier further includes a plurality of concentric rings, with each of the plurality of concentric rings has a plurality of microtargets formed in the concentric ring on the surface of the carrier, the microtargets configured to emulate particles; a drive, coupled to the carrier, that is configured to rotate the carrier such that at least some of the plurality of microtargets on the carrier move through three dimensions of the measurement volume, such that a light beam from the optical particulate sensor is reflected/scattered toward the optical particulate sensor; and at least one processor configured to determine one or more characteristics of the at least one microtarget on the carrier based on the reflected/scattered light.

Example 15 includes the system of example 14, wherein the plurality of microtargets on a concentric ring are formed in a plurality of clusters of microtargets, wherein each of the plurality of clusters of microtargets includes microtargets of varying size.
Example 16 includes the system of example 15, wherein the microtargets are formed at points across the concentric ring to cover a substantial portion of a width of the concentric ring.

Example 17 includes the system of any of examples 14 to 16, further comprising an interface that is adapted to be coupled to a window associated with the optical particulate sensor.

Example 18 includes the system of any of examples 14 to 17, wherein the carrier has an even number of sections, wherein each of the plurality of sections is paired with another section of the plurality of sections, the paired sections having equal height and weight, and being located directly opposite each other.

Example 19 includes the system of any of examples 14 to 17, wherein the height of each section is selected to enable testing and calibrating a full depth of the measurement volume of the optical particle sensor, as well as testing optical particulate sensor capability to reject measurements out of sensor measurement volume.

Example 20 includes the system of any of examples 14 to 19, wherein a radius of the carrier is chosen to enable simulation of particles of selected speeds.

## Claims

1. A system (100, 1300) for calibration and testing an optical particulate sensor (102, 1308), the system comprising:
a carrier (116, 1302) having at least one microtarget (113, 1304) that is configured to emulate a particle;
a frame (118), configured to receive the carrier, the frame further configured to position the at least one microtarget to pass through a measurement volume (108, 1316) of the optical particulate sensor;
a drive (120, 1320), coupled to the frame, that is configured to move the frame such that the at least one microtarget on the carrier moves through three dimensions of the measurement volume, such that a light beam from the optical particulate sensor is reflected/scattered toward the optical particulate sensor; and
at least one processor (128, 1322) configured to determine one or more characteristics of the at least one microtarget on the carrier based on the reflected/scattered light.

2. The system of claim 1, wherein the at least one microtarget comprises:
at least one reflective line of known width and/or at least one reflective dot of known diameter with flat surface parallel to a surface of the carrier or tilted at an angle to the surface of the carrier and/or at least one reflective two-dimensional or three-dimensional structure of known size that is formed on a layer of optically transparent material.

3. The system of claim 1 where carrier comprises a two or three dimensional structure allowing controlled microtarget motion in two or three dimensions while the carrier is rotated around a symmetry axis perpendicular to a surface of the carrier containing microtargets or translated along an axis parallel to the surface of the carrier containing microtargets.

4. The system of claim 1, wherein the carrier comprises an opening and wherein the at least one microtarget comprises a wire stretched out in free space in the opening.

5. The system of claim 1 and further comprising an interface that is adapted to be coupled to a window associated with the optical particulate sensor.

6. The system of claim 1, further comprising a light conditioning subsystem (130) that modifies the light beam incident on a microtarget, wherein the light conditioning subsystem comprises an optical attenuator which is configured to reduce incident power of the light beam and/or a half-wave plate which is configured to rotate polarization of the light beam by 90 degrees and/or a source of short light pulses emulating fast particle flyby to test a receiver and data processing electronics of the particulate sensor.

7. The system of claim 1, wherein the drive is configured to change frame position within the measurement volume while the carrier rotates or vibrates.

8. The system of claim 1, wherein the carrier has a conical shape and wherein the at least one microtarget comprises a plurality of microtargets disposed in a row between a vertex and a base of the carrier.

9. The system of claim 8, wherein the conical shape of the carrier is implemented as a stack of concentric cylinders (1602) of decreasing size from bottom to top of the carrier.

10. The system of claim 1, wherein the microtargets are positioned to enable testing and calibrating a position and size of the measurement volume of the optical particulate sensor, as well as testing optical particulate sensor capability to reject measurements outside the measurement volume.

11. The system of claim 1, wherein:
the carrier comprises a disk-shaped carrier having a substantially circular surface facing the optical particulate sensor;
wherein the carrier is divided into a plurality of sections, each section having a height such that the surface of each section passes through a measurement volume of the optical particulate sensor at a selected distance from te optical particulate sensor;
wherein the carrier further includes a plurality of concentric rings, with each of the plurality of concentric rings has a plurality of microtargets formed in the concentric ring on the surface of the carrier, the microtargets configured to emulate particles;
wherein the drive is configured to rotate the carrier such that at least some of the plurality of microtargets on the carrier move through three dimensions of the measurement volume, such that a light beam from the optical particulate sensor is reflected/scattered toward the optical particulate sensor.

12. The system of claim 11, wherein the plurality of microtargets on a concentric ring are formed in a plurality of clusters of microtargets, wherein each of the plurality of clusters of microtargets includes microtargets of varying size.

13. The system of claim 11, wherein the microtargets are formed at points across the concentric ring to cover a substantial portion of a width of the concentric ring.
